# EUROPEAN PATENT SPECIFICATION

(11) **EP 3 023 632 B1**
(45) Date of publication and mention of the grant of the patent: **13.03.2019**
(21) Application number: 14194065.0
(22) Date of filing: 20.11.2014
(51) Int. Cl.: H02M 3/156, F03B 17/06

(54) **SYSTEM FOR HARVESTING ENERGY FROM A FLUID INSTALLATION SYSTEM AND FLUID INSTALLATION SYSTEM**
SYSTEM ZUR GEWINNUNG VON ENERGIE AUS EINEM FLUIDTECHNISCHEM SYSTEM SOWIE FLUIDTECHNISCHES SYSTEM
SYSTÈME DE COLLECTE D'ÉNERGIE À PARTIR D'UN SYSTÈME D'INSTALLATION DE FLUIDE ET LEDIT SYSTÈME D'INSTALLATION

(43) Date of publication of application: 25.05.2016
(73) Proprietor: Honeywell Technologies Sarl, 1180 Rolle (CH)
(72) Inventor: Svoma, Jaroslav, 59214 Nové Veselí (CZ)
(74) Representative: Sturm, Christoph

(56) References cited:
- WO-A1-01/07783
- JP-A- S5 937 727
- US-A1- 2002 039 017

## Description

The present patent application relates to a system for harvesting energy from a fluid installation system. The invention relates further to a fluid installation system comprising such a system for harvesting energy.

In fluid installation systems like in a drinking water installation system or in a hydronic heating or cooling installation system a fluid flows through a pipe of the fluid installation system. The fluid flow represents a certain amount of kinetic flow energy of the fluid. It is desired to harvest electrical energy from the kinetic flow energy of the fluid. In fluid installation systems known from the practice, a turbine generator is installed directly in the pipe of the fluid installation system thorough which the fluid is flowing. This causes a relative high pressure drop within the pipe of the fluid installation system.

WO 01/07783 A1 discloses a system for harvesting energy from a fluid installation system, the fluid installation system having a pipe though which a fluid flows, the system for harvesting energy comprising: a restriction installable in the pipe though which a fluid flows; a bypass connectable to the pipe; a generator installed in the bypass, whereby the fluid which flows through the bypass runs the generator so that the generator generates electrical energy; an electrical energy storage device for storing the electrical energy generated by the generator.

US 2002/0039017 A1 discloses a DC-DC converter.

Against this background, a novel system for harvesting energy from a fluid installation system is provided which causes only a relative low pressure drop within the pipe of the fluid installation system and which allows to harvest a maximum amount of electrical energy from the fluid.

The system for harvesting energy from a fluid installation system is defined in claim 1.

According to the present invention, the system for harvesting energy from a fluid installation system comprises: a venturi tube installable in the pipe though which a fluid flows; a bypass connectable to the pipe and the venturi tube in such a way that a pressure drop over the venturi tube causes a portion of the fluid to flow through the bypass; a turbine generator installed in the bypass, whereby the fluid which flows through the bypass runs the turbine generator so that the turbine generator generates electrical energy; an electrical energy storage device for storing the electrical energy generated by the turbine generator; a DC/DC converter connected between the turbine generator and the electrical energy storage device; a controller setting the operating voltage for the DC/DC converter dependent on a flow rate of the fluid through the bypass or through the turbine generator installed in the bypass, namely in such a way that a maximum amount of electrical energy can be harvested by the turbine generator at the respective flow rate of the fluid.

The claimed invention provides system for harvesting energy from a fluid installation system which causes only a relative low pressure drop within the pipe of the fluid installation system and which allows to harvest at each flow rate of the fluid a maximum amount of electrical energy from the fluid.

Preferably, the controller receives a signal from the turbine generator depending on the flow rate of the fluid through the turbine generator. In this case no separate flow sensor is needed.

According to the present invention, the controller determines from the flow rate of the fluid through the bypass or through the turbine generator installed in the bypass a set point for the operating voltage for the DC/DC converter and provides that set-point to the DC/DC converter for operating the same. This provides an easy way to harvest a maximum amount of electrical energy by the turbine generator at the respective flow rate of the fluid.

Preferred developments of the invention are provided by the dependent claims and the description which follows. Exemplary embodiments are explained in more detail on the basis of the drawing, in which:

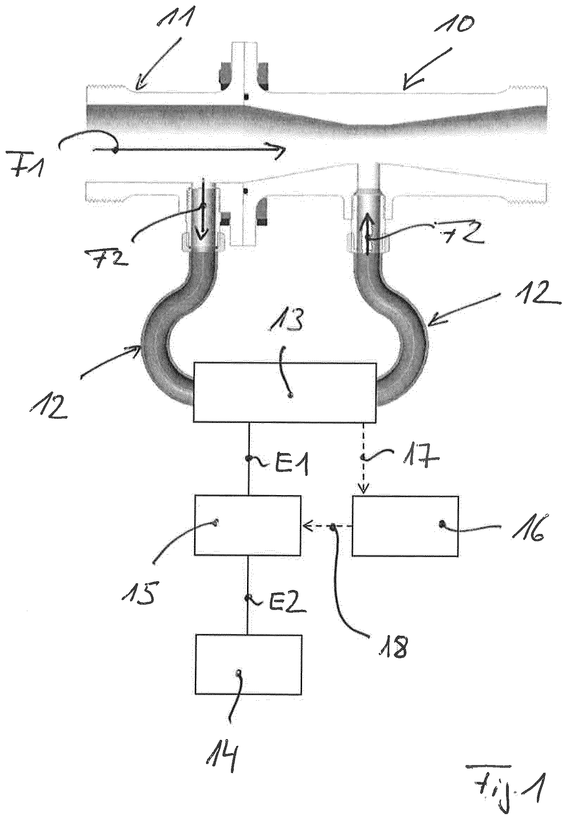

- Figure 1: shows a block diagram of a system for harvesting energy from a fluid installation system;
- Figure 2: shows a diagram further illustrating the invention.

The invention relates to a system for harvesting energy from a fluid installation system and to a fluid installation system having such an energy harvesting system.

The system for harvesting energy comprises a venturi tube 10 installable in a pipe 11 of the fluid installation system though which a fluid flows. The flow of the fluid through the pipe 11 and through the venturi tube 10 is illustrated by an arrow F1.

The system for harvesting energy comprises further a bypass 12 connectable to the pipe 11 and the venturi tube 10 in such a way that a pressure drop over the venturi tube 10 causes a portion of the fluid to flow through the bypass 12. The flow of the fluid through the bypass 12 is illustrated by an arrow F2.

The system for harvesting energy comprises further a turbine generator 13 installed in the bypass 12. The fluid which flows through the bypass 12 runs the turbine generator 13 so that the turbine generator 12 generates electrical energy E1 or electrical power.

The system for harvesting energy comprises further an electrical energy storage device 14 for storing the electrical energy generated by the turbine generator 13.

The system for harvesting energy comprises further a DC/DC converter 15 connected between the turbine generator 13 and the electrical energy storage device 14. The DC/DC converter 15 converts the electrical voltage provided by the turbine generator 12 into an electrical voltage level of the electrical energy storage device 14. The DC/DC converter 15 also acts as electrical load for the turbine generator 12.

The system for harvesting energy comprises further a controller 16 setting the operating voltage for the DC/DC converter 15 dependent on a flow rate of the fluid through the bypass 12 or through the turbine generator 13 installed in the bypass 12, namely in such a way that a maximum amount of electrical energy can be harvested by the turbine generator 13 at the respective flow rate of the fluid.

The controller 16 preferably receives a signal 17 from the turbine generator 13 depending on the flow rate of the fluid through the turbine generator 13. Such a signal can be a pulse signal, whereby the number of pulses within a defined time interval is proportional to a the flow rate of the fluid through the turbine generator 13

Alternatively, the flow rate of the fluid through the bypass 12 or through the turbine generator 13 can be provided by a separate flow sensor (not shown).

The controller 16 determines from the flow rate of the fluid through the bypass 12 or through the turbine generator 13 installed in the bypass 12 a set point 18 for the operating voltage for the DC/DC converter 15 and provides that set-point 18 to the DC/DC converter 15 for operating the same. As mentioned above, the set point 18 for the operating voltage for the DC/DC converter 15 is determined by the controller 16 in such a way that a maximum amount of electrical energy can be harvested by the turbine generator 13 at the respective flow rate of the fluid.

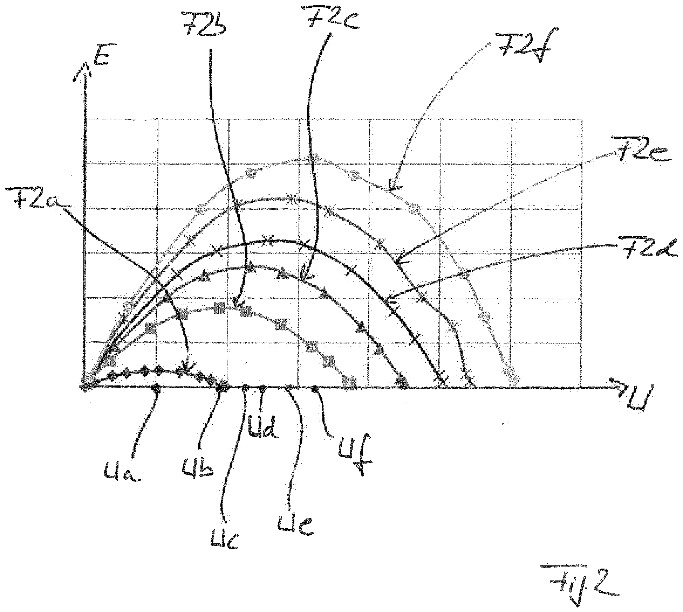

Fig. 2 shows a characteristic diagram implemented with the controller 16 in order to determine the set point 18 for the operating voltage for the DC/DC converter 15 dependent on the flow rate of the fluid through the bypass 12 or through the turbine generator 13.

F2a, F2b, F2c, F2d, F2e and F2f represent characteristic lines of the characteristic diagram for different flow rates F2 of the fluid through the bypass 12 or through the turbine generator 13, whereby F2a < F2b < F2c < F2d < F2e < F2f. Depending on the flow rate F2 of the fluid through the bypass 12 or through the turbine generator 13 the controller 16 determines the set point 18 for the operating voltage U for the DC/DC converter 15 so that a maximum amount of electrical energy E can be harvested by the turbine generator 13 at the respective flow rate F2 of the fluid. The respective set points 18 for the DC/DC converter 15 for the flow rates F2a, F2b, F2c, F2d, F2e and F2f are illustrated as operating voltages Ua, Ub, Uc, Ud, Ue and Uf.

Alternatively, the operating voltage for the DC/DC converter 15 can be calculated from the flow rate using a formula or a model.

The invention allows an effective energy harvesting in fluid installations. The impact of the energy harvesting to the fluid installation is minimized. The invention allows a matching of the impedance of the turbine generator 13 to the load represented by the DC/DC converter 15 by adjusting the operating voltage of the DC/DC converter 15 as a function of the flow rate at each flow rate through the bypass 12. The optimal working voltage of the turbine generator is adapted to the fluid flow rate. DC/DC convertor 15 allows to harvest the energy at different voltage levels. The controller 16 sets and controls optimal working voltage of the DC/DC convertor 15. The invention keeps the pressure loss within the pipe 11 as small as possible, because it is possible to harvest a maximum amount of electrical energy at each flow rate of the fluid.

The fluid installation system comprising such a system for harvesting energy can be a drinking water installation system or in a hydronic heating or cooling installation system. The solution is preferably used in combination with so-called DN water pipes 11 where flow rate exceeds 10m³ per hour.

### List of reference signs

- 10: venturi tube
- 11: pipe
- 12: bypass
- 13: turbine generator
- 14: electrical energy storage device
- 15: DC/DC converter
- 16: controller
- 17: signal
- 18: set point

## Claims

1. System for harvesting energy from a fluid installation system, the fluid installation system having a pipe though which a fluid flows, the system for harvesting energy comprising:
a venturi tube (10) installable in the pipe (11) though which a fluid flows;
a bypass (12) connectable to the pipe (11) and the venturi tube (10) in such a way that a pressure drop over the venturi tube (10) causes a portion of the fluid to flow through the bypass (12)
a turbine generator (13) installed in the bypass (12), whereby the fluid which flows through the bypass (12) runs the turbine generator (13) so that the turbine generator (13) generates electrical energy;
an electrical energy storage device (14) for storing the electrical energy generated by the turbine generator (13);
**characterized in that** a DC/DC converter (15) being connected between the turbine generator (13) and the electrical energy storage device (14);
a controller (16) setting the operating voltage for the DC/DC converter (15) dependent on a flow rate of the fluid through the bypass (12) or through the turbine generator (13) installed in the bypass (12), namely in such a way that a maximum amount of electrical energy can be harvested by the turbine generator (13) at the respective flow rate of the fluid, wherein the controller (16) determines from the flow rate of the fluid through the bypass (12) or through the turbine generator (13) installed in the bypass (12) a set point (18) for the operating voltage for the DC/DC converter (15) and provides that set-point (18) to the DC/DC converter (15) for operating the same.

2. System as claimed in claim 1, **characterized in that** the controller (16) receives a signal (17) from the turbine generator (13) depending on the flow rate of the fluid through the turbine generator (13).

3. Fluid installation system, having a pipe (10) though which a fluid flows, **characterized by** a system for harvesting energy as claimed in one of claims 1 to 2.

4. Fluid installation system as claimed in claim 3, **characterized in that** the same is a hydronic heating or cooling installation system.

5. Fluid installation system as claimed in claim 3, **characterized in that** the same is a drinking water installation system.

## Patentansprüche

1. System zur Gewinnung von Energie aus einem fluidtechnischen System, das fluidtechnische System ein Rohr aufweisend, durch das ein Fluid strömt, wobei das System zur Gewinnung von Energie Folgendes umfasst:
ein Venturi-Rohr (10), einbaubar in das Rohr (11), durch das ein Fluid strömt;
eine Umgehungsleitung (12), verbindbar mit dem Rohr (11) und dem Venturi-Rohr (10) in einer solchen Weise, dass ein Druckabfall über dem Venturi-Rohr (10) bewirkt, dass ein Teil des Fluids durch die Umgehungsleitung (12) strömt;
ein Turbinengenerator (13), eingebaut in die Umgehungsleitung (12), wobei das Fluid, das durch die Umgehungsleitung (12) strömt, den Turbinengenerator (13) so antreibt, dass der Turbinengenerator (13) elektrische Energie erzeugt;
eine elektrische Energiespeichervorrichtung (14) zum Speichern der durch den Turbinengenerator (13) erzeugten elektrischen Energie;
**dadurch gekennzeichnet, dass**
ein Gleichstrom-Gleichstrom-Wandler (15) zwischen dem Turbinengenerator (13) und der elektrischen Energiespeichervorrichtung (14) verbunden ist;
eine Steuerung (16), die die Betriebsspannung für den Gleichstrom-Gleichstrom-Wandler (15) in Abhängigkeit von der Durchflussrate des Fluids durch die Umgehungsleitung (12) oder durch den in die Umgehungsleitung (12) eingebauten Turbinengenerator (13) einstellt, nämlich in einer Weise, dass ein maximaler Betrag an elektrischer Energie durch den Turbinengenerator (13) bei der entsprechenden Durchflussrate des Fluids gewonnen werden kann, wobei die Steuerung (16) aus der Durchflussrate des Fluids durch die Umgehungsleitung (12) oder durch den in die Umgehungsleitung (12) eingebauten Turbinengenerator (13) einen Einstellpunkt (18) für die Betriebsspannung des Gleichstrom-Gleichstrom-Wandlers (15) bestimmt und diesen Einstellpunkt (18) für den Gleichstrom-Gleichstrom-Wandler (15) zum Betreiben desselben bereitstellt.

2. System nach Anspruch 1, **dadurch gekennzeichnet, dass** die Steuerung (16) ein Signal (17) von dem Turbinengenerator (13) in Abhängigkeit von der Durchflussrate des Fluids durch den Turbinengenerator (13) empfängt.

3. Fluidtechnisches System, ein Rohr (10) aufweisend, durch das ein Fluid strömt, **gekennzeichnet durch** ein System zur Gewinnung von Energie, wie in einem der Ansprüche 1 bis 2.

4. Fluidtechnisches System nach Anspruch 3, **dadurch gekennzeichnet, dass** selbiges ein hydronisches Heizungs- oder -kühlungssystem ist.

5. Fluidtechnisches System nach Anspruch 3, **dadurch gekennzeichnet, dass** selbiges ein Trinkwassersystem ist.

## Revendications

1. Système pour recueillir de l'énergie d'un système d'installation à fluide, ce système d'installation à fluide ayant un tuyau à travers lequel un fluide s'écoule, le système pour recueillir de l'énergie comprenant :
un tube de Venturi (10) pouvant être installé dans le tuyau (11) à travers lequel un fluide s'écoule ;
un conduit de dérivation (12) pouvant être raccordé au tuyau (11) et au tube de Venturi (10) de manière à ce qu'une chute de pression de part et d'autre du tube de Venturi (10) entraîne l'écoulement d'une partie du fluide à travers le conduit de dérivation (12),
une turbogénératrice (13) installée dans le conduit de dérivation (12), le fluide qui s'écoule à travers le conduit de dérivation (12) faisant fonctionner la turbogénératrice (13) de manière à ce que la turbogénératrice (13) génère de l'énergie électrique ;
un dispositif de stockage d'énergie électrique (14) pour y stocker l'énergie électrique générée par la turbogénératrice (13) ;
**caractérisé en ce qu**'un convertisseur c.c.-c.c. (15) est connecté entre la turbogénératrice (13) et le dispositif de stockage d'énergie électrique (14) ;
un régulateur (16) réglant la tension de fonctionnement pour le convertisseur c.c.-c.c. (15) en fonction d'un débit du fluide à travers le conduit de dérivation (12) ou à travers la turbogénératrice (13) installée dans le conduit de dérivation (12), à savoir de manière à ce qu'une quantité maximum d'énergie électrique puisse être recueillie par la turbogénératrice (13) au débit respectif du fluide, ce régulateur déterminant, à partir du débit du fluide à travers le conduit de dérivation (12) ou à travers la turbogénératrice (13), une valeur de consigne (18) pour la tension de fonctionnement pour le convertisseur c.c.-c.c. (15) et fournissant cette valeur de consigne (18) au convertisseur c.c.-c.c. (15) pour faire fonctionner celui-ci.

2. Système selon la revendication 1, **caractérisé en ce que** le régulateur (16) reçoit un signal (17) de la turbogénératrice (13) dépendant du débit du fluide à travers la turbogénératrice (13).

3. Système d'installation de fluide, ayant un tuyau (10) à travers lequel un fluide s'écoule, **caractérisé par** un système pour recueillir de l'énergie selon une des revendications 1 ou 2.

4. Système d'installation de fluide selon la revendication 3, **caractérisé en ce que** celui-ci est un système d'installation de chauffage ou de refroidissement hydronique.

5. Système d'installation de fluide selon la revendication 3, **caractérisé en ce que** celui-ci est un système d'installation à eau potable.
